# EUROPEAN PATENT APPLICATION

(11) **EP 1 908 809 A1**
(43) Date of publication of application: **09.04.2008**
(21) Application number: 07117714.1
(22) Date of filing: 02.10.2007
(51) Int. Cl.: C09K 5/02, A01G 9/24

(54) **Assembly of a horticultural facility and a livestock-breeding facility**

(30) Priority: 02.10.2006 NL 2000253
(71) Applicant: Schmitz, Harry, 6061 CT Posterholt (NL)
(72) Inventor: Schmitz, Harry, 6061 CT Posterholt (NL)
(74) Representative: van Westenbrugge, Andries

(57) **Abstract**

The invention relates to an assembly comprising a horticultural facility, such as a horticultural greenhouse (A), inside which photosynthesis can take place and which is provided with elements which allow sunlight through, and a livestock-breeding facility (B), such as a pen, inside which a biological oxidation process can take place, in which the livestock-breeding facility comprises an air outlet which is in fluid communication with an air inlet of the horticultural facility and which is provided with an air-displacement device, in which the assembly is furthermore provided with heat-storage elements comprising phase change material (PCM) (1), and in which the heat-storage elements comprise an air-circulation device (2) for circulating air from the horticultural facility over the PCM, and in which the assembly comprises a control device which is provided with sensors for measuring at least one ambient variable, such as temperature and/or atmospheric humidity and/or carbon dioxide, in the horticultural facility and in the livestock-breeding facility, and which is operationally connected to the air-displacement device and the air-circulation device, for controlling the air stream past the PCM and the air flow rate of the livestock-breeding facility to the horticultural facility on the basis of the values of the at least one ambient variable determined by means of the sensors.

## Description

### Background of the invention

The invention relates to climate control in a horticultural facility, such as a horticultural greenhouse.

Thermal climate control in horticultural greenhouses is known per se, for example by using PCM (Phase Change Material), from inter alia GB-A-2,215,357, GB-A-2,376,028, US-A-4,498,459, GB-A-2,259,231, US-A-4,510,921, EP-A-121,668, JP-A-60000291 and US-A-4,416,260.

However, these horticultural greenhouses usually produce a large amount of carbon dioxide. There is therefore room for improvement of these systems.

### Summary of the invention

It is an object of the invention to provide improved climate control for horticultural facilities.

It is another object of the invention to provide an assembly which has less impact on the environment.

To this end, the invention provides an assembly comprising a horticultural facility, such as a horticultural greenhouse, inside which photosynthesis can take place and which is provided with elements which allow sunlight through, and a livestock-breeding facility, such as a pen, inside which a biological oxidation process can take place, in which the livestock-breeding facility comprises an air outlet which is in fluid communication with an air inlet of the horticultural facility and which is provided with an air-displacement device, in which the assembly is furthermore provided with heat-storage elements comprising phase change material (PCM), and in which the heat-storage elements comprise an air-circulation device for circulating air from the horticultural facility over the PCM, and in which the assembly comprises a control device which is provided with sensors for measuring at least one ambient variable, such as temperature and/or atmospheric humidity and/or carbon dioxide, in the horticultural facility and in the livestock-breeding facility, and which is operationally coupled to the air-displacement device and the air-circulation device, for controlling the air stream past the PCM and the air flow rate of the livestock-breeding facility to the horticultural facility on the basis of the values of the at least one ambient variable determined by means of the sensors.

By combining a facility in which biological (natural), exothermic oxidation occurs and a facility in which photosynthesis occurs and by providing at least one of these facilities with heat-storage elements, the energy demand of a horticultural facility can be reduced considerably. In addition, the emission of harmful substances and the emission of carbon dioxide can be limited to a significant extent. As a result of using PCM, the horticultural greenhouse and the livestock-breeding facility can exchange their heat and it is possible to make more efficient use of passive solar heat, making it possible to achieve the desired climate, for example the desired working temperature, atmospheric humidity and carbon dioxide concentration, in both facilities.

Incidentally, the term livestock in this application is understood, inter alia, to include poultry as well.

Furthermore, in this application the term air-displacement device is also understood to include devices for starting up, maintaining and stimulating natural air circulation through an induction process, for example by means of air ducts which are placed in specific positions, and control valves. However, in particular, such an air-displacement device comprises fans or other (electrically or mechanically driven) air-displacement apparatus, for displacing air mechanically or in a mechanically supported manner or otherwise.

In one embodiment, the livestock-breeding facility furthermore comprises an air inlet, which may, if desired, be provided with a heat exchanger.

In one embodiment, the air inlet in the livestock-breeding facility is provided with a further air-displacement device.

In one embodiment, the PCM has a temperature range of 15-30, preferably 18-28 degrees Celsius.

In one embodiment, an odour filter and/or an ammonia filter is arranged between the air outlet of the livestock-breeding facility and the air inlet of the horticultural facility. It is also possible to design this as a biofilter. Alternatively, the air can be passed through the potting soil or the growing substrate, which may additionally be provided with, for example, microorganisms for that purpose.

In one embodiment, the horticultural facility is built on top of the livestock-breeding facility.

In one embodiment, the PCM is arranged in a fan-convector arrangement provided with a fan on the suction side, the PCM preferably being in the form of panels, preferably arranged substantially parallel to one another.

In one embodiment, the PCM is arranged in at least one low-pressure induction unit, the PCM preferably being arranged in the form of panels, and provided with air ducts, preferably ducts between panels of PCM which are arranged substantially parallel to one another. Both arrangements allow for an improved temperature control.

In one embodiment, the charging and discharging of the PCM takes place in a 24-hour cycle.

In one embodiment, the PCM is arranged substantially in the form of parallel panels between which air can flow. The panel surface in this case is approximately 1-2 m² of PCM per m² of floor area of the horticultural greenhouse. It is preferable if the panel surface is approximately 1.4-1.8 m² of PCM per m² of floor area of the horticultural greenhouse.

In one embodiment, approximately 20-30 kg of PCM material is fitted per m² of floor area of the horticultural greenhouse, preferably approximately 24-26kg of PCM material per m² of floor area of the horticultural greenhouse. These figures apply in particular when PCM is being used in fan-coil units. The PCM will in that case usually have a melting point of 20-25 degrees Celsius.

The invention furthermore relates to a method for controlling climatic conditions in an assembly as described above, in which air is admitted into the livestock-breeding facility by means of the air inlet, the air admitted is transported past the livestock present, the air is subsequently passed into the greenhouse via the air inlet of the horticultural facility, and the air of the greenhouse is passed over the PCM, with the control device determining ambient parameters, such as the temperature, atmospheric humidity and/or carbon dioxide in the livestock-breeding facility and in the horticultural facility, comparing the ambient parameters with predetermined values thereof, and adjusting the flow rate of the air admitted in the livestock-breeding facility and from the livestock-breeding facility to the horticultural facility on the basis of the comparison.

In a further preferred embodiment, the horticultural greenhouse is provided with insulating glazing, a (roll-out) insulating cloth, and/or an insulated floor.

The invention furthermore relates to an air-treatment device for a livestock-breeding facility or a horticultural facility, in particular for use in an assembly, device or facility according to one of the preceding claims, comprising a stack of substantially parallel elements provided with PCM material and an air-displacement device, arranged so as to allow air to be passed between the elements. In one embodiment thereof, the elements and air-displacement device are accommodated in a closed housing which is provided with an air inlet and an air outlet. In a further embodiment, the air-treatment device is provided with a control device for controlling the air-displacement device. Furthermore, a temperature gauge may be provided which is operationally connected to the control device. The control device may be designed to control the air-displacement device on the basis of a measured temperature, in particular, outside the air-treatment device.

The invention furthermore relates to a device provided with one or more of the characterizing features described in the attached description and/or illustrated in the attached drawings.

The invention furthermore relates to a method comprising one or more of the characterizing steps described in the attached description and/or illustrated in the attached drawings.

It will be clear that the various aspects described in this patent application can be combined and can each be considered for a divisional patent application on their own.

### Short description of the figures

The attached figures illustrate various embodiments of an assembly according to the invention. The invention can in principle be implemented in the form of three types of climate installations, namely:
Fig. 1 a central installation in the form of a relatively large integrated more central air-treatment cabinet;
Fig. 2 a completely decentralized installation comprising three separate air-treatment cabinets, in which the PCM is accommodated in decentralized fan convectors (also referred to as fan coil units);
Fig. 3 a central installation in the form of another relatively large integrated more central air-treatment cabinet, in which the PCM is, however, accommodated in decentralized active cooling and heating convectors (also referred to as low-pressure induction units).

### Description of embodiments

The invention for climatizing horticultural greenhouses in an autarkic way is based on the idea that it should work in the same way as our water planet Earth. In this context, three insights are relevant:
Both planet Earth and a horticultural greenhouse form a greenhouse. Planet Earth is surrounded by an atmosphere which readily allows short-wave solar radiation to pass through, but does not allow long-wave (earthly) heat radiation through. This also applies to a glass horticultural greenhouse.

In contrast to the land planet Mars, the temperature on the water planet Earth is to a large degree determined by phase transitions, namely of ice melting into water (and freezing again) and water evaporating into water vapour (and condensing again). More than two thirds of the Earth's surface covered by (evaporating and condensing) water and (melting and freezing) ice. A glass horticultural greenhouse has to be conditioned in the same manner, namely by using PCM. Conditioning the atmospheric air on planet Earth and the internal air in the greenhouse by means of storing latent heat is much more efficient than climatizing by means of storing only perceptible heat, as has been used hitherto in horticultural greenhouses.

A horticultural greenhouse has to be additionally conditioned in the same manner as a dissipative structure like the Earth by means of natural cycles. In biospheres such as the Earth, plants produce oxygen and sugars (photosynthesis), while animals in turn consume said oxygen and said sugars (oxidation). In accordance with the second main law of thermodynamics, heat loss occurs under these circumstances and carbon dioxide and water are formed, which in turn form the raw materials for the plants. A clear example is the case where a horticultural greenhouse in which tomatoes are grown is to be connected to a pig pen, for example. The pigs produce water vapour, carbon dioxide and perceptible heat. These waste products of the pig pen are passed to the tomato greenhouse by means of an air stream, so that the animal waste products can serve as raw materials for growing tomatoes. In the case of this invention, mechanical sources of heat, such as (gas-fired) boilers are replaced by biological sources of heat in the form of warm-blooded animals kept for livestock breeding.

Furthermore, most horticultural greenhouses being used at present are not working in an optimum manner, inter alia because they:
- are in most cases provided with single glazing and
- in addition are conditioned by mechanical sources of heat (mechanical oxidation), such as boilers, heat pumps, combined heat and power installations, steam humidification and carbon dioxide fertilization by supplying combustion gases to the greenhouse of the mechanical sources of heat.

Therefore, the horticultural greenhouse of the present invention is preferably:
- provided with an optimized greenhouse shield, adapted to the PCM to be used,
- provided with PCM, so that the horticultural greenhouse is to a large degree conditioned by the intake and emission of latent heat. The excess solar heat produced during daytime and the heat produced by the livestock pen is stored in the PCM, as a result of which the horticultural greenhouse is cooled during the day. At night, this stored solar heat and animal heat are released again, as a result of which the horticultural greenhouse is heated to the desired temperature and,
- in addition, humidified, heated and supplied with carbon dioxide fertilization by means of natural sources of heat (biological oxidation) in the form of warm-blooded animals which are intended for livestock breeding. Horticulture and livestock breeding are thus combined with one another, which significantly reduces the total emission of carbon dioxide and combustion gases. In addition, the use of space can be reduced.

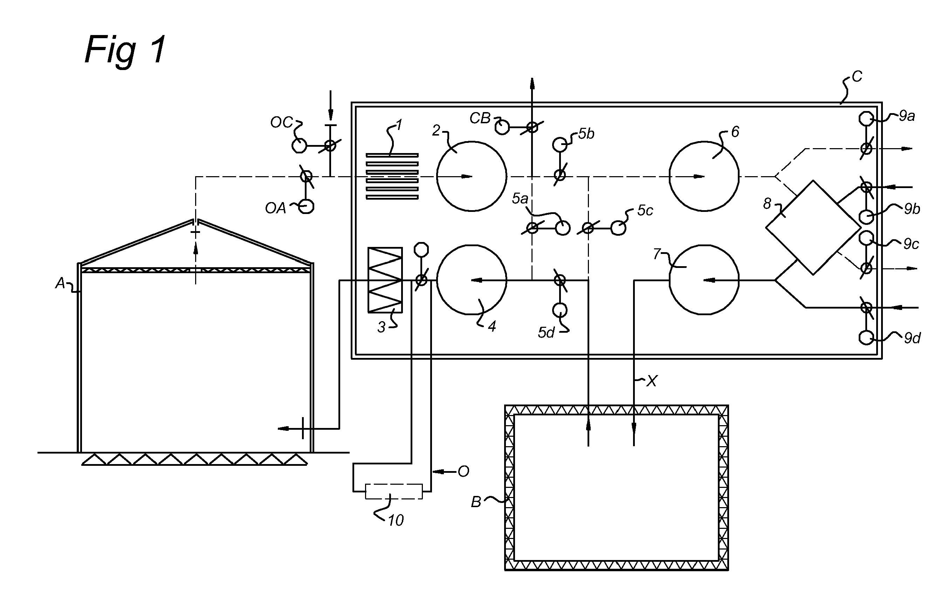

Figs 1-3 shows different exemplary embodiments of the invention. Identical parts are denoted by the same reference numerals as far as possible.

Fig. 1 shows an assembly according to the invention, in which a horticultural greenhouse A has an air connection with an air-treatment device C. The horticultural greenhouse A can thus exchange air with the air-treatment device C, in which it is possible to pass air from the horticultural greenhouse A to the air-treatment device C and from the air-treatment device C to the horticultural greenhouse A.

The air-treatment device C has an air connection with a livestock pen B. The livestock pen B can supply air to the air-treatment device C and receive treated air from the latter. It will be clear that it is of course also possible to use water or another fluid to exchange heat. However, air is preferred because, in this way, the horticultural greenhouse A and the livestock pen B can, via the air-treatment device C, also exchange water vapour and carbon dioxide.

The air-treatment device C here comprises a PCM unit 1 which is provided with a fan 2 for drawing in air via the PCM unit 1 from the horticultural greenhouse A.

The air-treatment device C has an air inlet provided with a control valve 9D through which air can be directly drawn in by means of fan 7 and passed to the livestock pen B. Alternatively, air can be passed to the livestock pen B through the air inlet with control valve 9B via a heat exchanger 8 (high-efficiency heat recovery unit) and via fan 7.

The air-treatment device C furthermore has an air outlet provided with control valve 9A by means of which air can be directly discharged from the air-treatment device C via discharge fan 6. Alternatively, the air can be discharged via the heat exchanger 8 through the air outlet with control valve 9C.

In this embodiment, air is drawn into the air treatment device C from the livestock pen B via fan 4, optionally via dehumidifier 10 and ammonia filter 3. This air is passed directly to the horticultural greenhouse A. Excess heat is discharged via the PCM unit 1 via control valves 5A, 5C, 5B, 5D. It is also possible to pass the air through the air-treatment device C using alternative routes which will be described below.

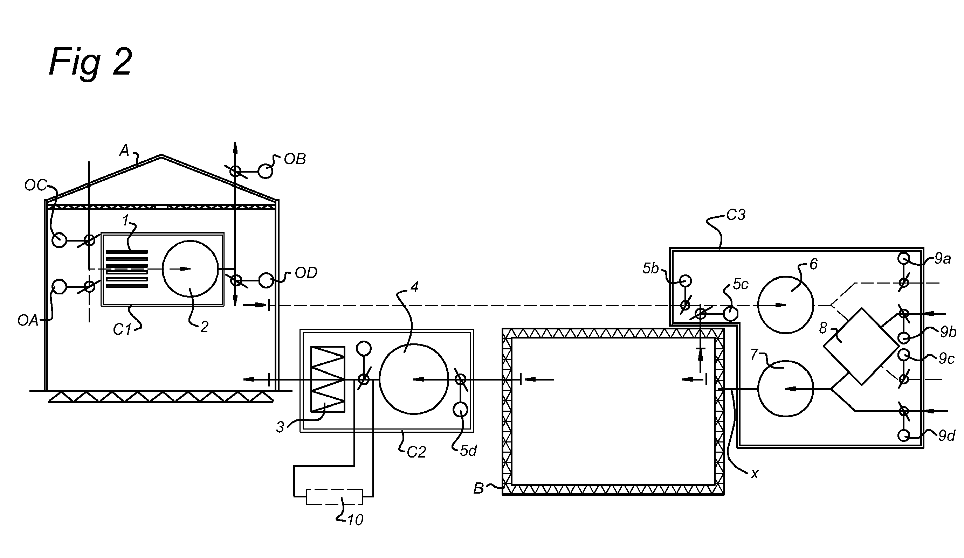

Fig. 2 shows an embodiment in which the air-treatment device is divided into three separate components C1, C2 and C3. Component C3 in this case regulates the air supply and air discharge from and to the livestock pen B. Component C2 regulates the air supply and any air treatment of air from the livestock pen B to the horticultural greenhouse A. Component C 1 regulates the air treatment in the horticultural greenhouse A.

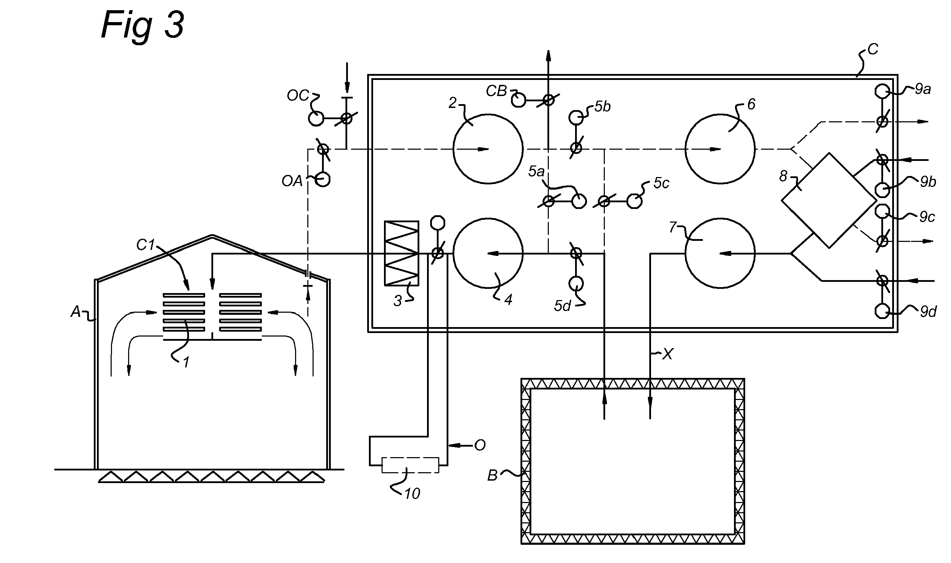

Fig. 3 shows the arrangement of Fig. 1, but in this case the horticultural greenhouse A is provided with the air-treatment device C1 provided with PCM 1, with the air flowing along PCM elements by means of an air-induction process and there either emits heat or absorbs heat.

In one embodiment, the invention comprises the following components:
A. A horticultural greenhouse (= photosynthesis process) with:
   - an optimized greenhouse shield (single, double, HR++, a roll-out light and/or insulation screen).
   - (if possible) an insulated ground floor. In combination with the PCM, the horticultural greenhouse is intended to be a well-insulated solar collector, in which the daily excess of solar heat and animal heat is stored in the PCM and the greenhouse is thus cooled to the desired temperature, as a result of which the daily ventilation is reduced very significantly and thus effectively becomes a closed horticultural greenhouse in which it is possible to achieve a high concentration of carbon dioxide.
B. A livestock pen (oxidation process) containing, for example, pigs, chickens, cows, etc. or any other kind of warm-blooded animal suitable for livestock breeding. These animals produce the following in a biological manner:
   - carbon dioxide, water vapour and heat.
B2. The biological oxidation process in the form of a livestock pen may, of course, also be replaced by an artificial oxidation process in the form of boilers, combined heat and power installations, steam humidifiers and more of this kind of apparatus. Coupling a horticultural greenhouse according to the present invention provided with PCM to mechanical sources of heat and cold, such as the abovementioned boilers, etc, but also to aquifers and heat pumps has the significant advantage that the mechanical sources of heat can then be made considerably smaller and are therefore less expensive compared to the present conventional horticultural greenhouses without PCM.

In summary, the following components may be present:
C. Air-treatment device for combining the photosynthesis with the biological or mechanical oxidation process for the abovementioned three types of climate installation.
0A-0C Air-side discharge valves.
1. Phase Change Material (PCM) heat and cold accumulator. This is an air-side cooling and heating accumulator with PCM having a melting and/or solidification point which is somewhere between approximately 15 and approximately 30 degrees Celsius. The correct freezing and melting temperature is determined by means of the required temperature of the plants to be grown.
2. A recirculation fan for air circulation in the horticultural greenhouse.
3. Odour and/or ammonia filter. If biological sources of heat, such as a livestock pen, are used, these preferably comprise an odour and/or ammonia filter. If the intake air for the livestock pen were to be passed through the potting soil of the plants, filtering could also be effected by the potting soil.
4. A supply fan for supplying heated and/or cooled, humidified and carbon dioxide-enriched air from the livestock pen and/or the (artificial) mechanical source of heat.
5. Reference numerals 5A and 5B to 9A and 9B refer to air valves which rotate in the same or opposite directions. By means of these, it is possible to set/regulate the desired air flow rates in the successive annual seasons, depending on the required heat and/or cold and/or humidification and/or carbon dioxide fertilization so that the horticultural greenhouse and the livestock pen are conditioned at the desired settings.
6. An air-discharge fan.
7. A suction fan for fresh outside air.
8. A high-efficiency heat recovery unit with an air-side bypass facility.
10. A simple dehumidifier provided with semi-permeable diaphragms. During summer, the atmospheric humidity in the horticultural greenhouse will already be high due to evaporation caused by the plants which are grown. In that case, it is not desirable to supply additional humidity through the biological oxidation process (= animals in the livestock pen). The water vapour which is present in the combustion air can then diffuse to the outside through the semi-permeable diaphragm before the combustion air is supplied to the horticultural greenhouse.

Although not illustrated, it is also possible to use indirect adiabatic humidification and/or adiabatic cooling.

As is illustrated in Figs 1, 2 and 3, the invention can be embodied in a single air-treatment cabinet (= centralized solution) or in air-treatment cabinets which are separated into two induction units or into three fan-coil units (= decentralized solution).

### THE MODE OF OPERATION

The combination of a horticultural greenhouse with PCM and a livestock pen brings the photosynthesis of the plants in the horticultural greenhouse together with the oxidation process of the animals in the livestock pen in a cyclic process, with heat, moisture, carbon dioxide and oxygen being exchanged in both directions. If everything were dimensioned correctly, it could be assembled and embodied to form a truly cyclic process, with the waste air from the horticultural greenhouse being used again as intake air for the livestock pen. In net terms, there would then be no carbon dioxide emissions to the atmosphere. The animals and the plants would, as it were, be accommodated in one common horticultural greenhouse/livestock pen together with the PCM. For the time being, no air-side cyclic process is illustrated in the figures.

In principle, there are 3 main modes of operation which can be distinguished, namely:
- heating, humidifying and carbon-dioxide fertilizing in the heating season, mainly during the winter months;
- heating, cooling (also during the day by the PCM) and carbon-dioxide fertilizing during the transitional seasons in the autumn and spring, and
- mainly cooling in the cooling season during the summer months.

### I. The winter period.

The mode of operation is described with reference to Fig. 1. Of course, it also applies to the other types of installations according to Figs 2 and 3, albeit with a few alterations.

On a cloudy and cold wintry day, the amount of diffuse global solar radiation during the day which is incident in the horticultural greenhouse is insufficient to maintain the desired interior temperature during the day and night. In this case, additional heating is required. Outside air, optionally heated via a high-efficiency heat-recovery unit, is supplied to the well-insulated livestock (pig) pen via air valve 9B, heat exchanger 8 and the fresh outside air fan 7. The animals use the oxygen for the combustion of the feed (= metabolization). In the well-insulated livestock pen, the fresh outside air is then:
- heated, in the case of pigs, from for example 20 degrees Celsius to 30-35 degrees Celsius;
- humidified by the breath and vapour diffusion of the animals, and
- enriched with carbon dioxide by the exhaled air from the lungs.

The heated, humidified and carbon-dioxide fertilized air is supplied to the horticultural greenhouse containing, for example, tomato plants, via air valve 5D, air supply fan 4 and ammonia filter 3. Via the PCM accumulator 1 and the recirculation fan 2, any vertical temperature gradient which might be present is reduced and the excess heat is stored in the PCM. This mainly takes place during the day, when there is also still global solar radiation. During the night, the negative vertical temperature gradient, created mainly by the nightly radiation of heat in the horticultural greenhouse, will be reduced by releasing the latent heat which is present in the PCM accumulator and has been stored during the day. Part of the recirculation air is discharged to the outside via air valve 5B. This part is generally approximately equal to the amount of air which is supplied to the pig pen as fresh outside air. The remainder of the recirculation air is returned to the horticultural greenhouse at the correct temperature via air valve 5A. Spent greenhouse air is discharged to the outside via air valve 5B, discharge fan 6, high-efficiency heat recovery unit 8 and air valve 9C. The thermal energy of the discharged air flow is transferred to the new fresh outside air flow for the livestock pen via the high-efficiency heat recovery unit. The new fresh outside air flow is here preheated in this way from a minimum of -10 degrees Celsius to approximately 20 degrees Celsius.

The fresh outside air flow rate via air valve 9B (and/or air valve 9D) is determined based on the additional heating power required and the outside air flow rate required for the livestock pen to keep the animals alive and rear them under healthy and thermally comfortable conditions. The recirculation flow rate in the horticultural greenhouse flowing according to the circuit 1, 2, 5A, 4 and 3 is determined based on a maximum permissible vertical temperature gradient in the horticultural greenhouse in order to stimulate optimum growth of the plants to be cultivated. The fresh outside air flow rate in flow circuit 9B, 8, 7, if possible 5C, 6 and again 8 and 9C will usually be smaller than the recirculation flow rate in circuit 1, 2, 5A, 4 and 3. At the air valves 5B and 5D, two air streams will then be mixed as follows:
supply flow rate = recirculation flow rate + discharge flow rate
   with
discharge flow rate = fresh outside air flow rate.

In summary, the result is that during cold wintry days where there is insufficient solar radiation in the horticultural greenhouse during the day, the horticultural greenhouse is additionally heated and humidified and provided with carbon dioxide fertilization by means of the livestock pen.

### II. The summer period.

During hot summery days, the horticultural greenhouse will usually have to be cooled as much as is reasonably possible, preferably with a closed ventilation roof in order to keep the carbon dioxide concentration as high as is reasonably possible. Preferably, no carbon dioxide is ventilated to the outside. When the sun shines during the day, the air in the horticultural greenhouse is preferably substantially recirculated, that is to say air is pumped round in the horticultural greenhouse, via air valve 0A, PCM accumulator 1, recirculation fan 2, air valve 5A, supply fan 4 and ammonia filter 3. The PCM will then cool the circulated air as if it were a closed horticultural greenhouse. Admixture of conditioned air from the livestock pen via air valve 5D will not take place, or hardly at all.

Obviously, the animals in the livestock pen will also have to be kept alive and reared in a healthy and thermally comfortable pen.

The air flow in the livestock pen will then be as follows. Waste air is discharged from the livestock pen via bypass valve 5C and/or via an indirect adiabatic humidifier, for example at high-efficiency heat recovery unit 8, and air valve 9C. Optionally cooled fresh outside air is supplied to the pen by means of fan 7. The waste air from the pen is discharged to the outside via air valve 5C and discharge fan 6. Optionally, an ammonia filter will have to be fitted in this waste air.

The ventilation installation of the livestock pen may be out of use because the animals are outside when the weather is good.

At night, there will be little, if any, flow of recirculation air in the horticultural greenhouse. Then, the PCM is discharged using colder nocturnal outside air via outside air valve 0C, PCM accumulator 1, discharge fan 2 and the outside air valve 0B without the horticultural greenhouse being opened, i.e. the PCM then releases its heat. The nocturnal discharge of the solar heat accumulated in the PCM is necessary in order to be able to cool the horticultural greenhouse again during the day by means of the PCM.

In summary, during hot summery days when the solar radiation incident in the horticultural greenhouse is more than sufficient during the day, the horticultural greenhouse is cooled by means of the PCM which is, present, as a result of which the greenhouse can remain closed. The accumulated heat in the PCM has to be discharged at night by means of colder outside air, in which case the horticultural greenhouse itself again remains closed. If desired, the livestock pen is cooled via the bypass valve or the indirect adiabatic cooling in order to rear the livestock present, such as the pigs, chickens, cows, etc. in a healthy and thermally comfortable environment. It is possible that the installation in the livestock pen is not in use because the animals are outside, for example in the case of an ecological or biological livestock pen.

### III. The spring and autumn periods.

The mode of operation according to the invention will be somewhere in a part-load operating mode between the two abovementioned full-load operating modes for the winter and summer periods, depending on:
- the required cooling power in the horticultural greenhouse and livestock pen,
- the required heating power in the horticultural greenhouse and livestock pen,
- the required humidification in the horticultural greenhouse and
- the required carbon dioxide fertilization in the horticultural greenhouse.
More or less heated, humidified, dehumidified and carbon dioxide-enriched air will be mixed in from the livestock pen via the air valves 5D and 5B. Also, the discharge of the PCM during the night will be reduced compared to the full-load operation during the summer period. In particular during the spring and autumn periods, sufficient solar heat will be stored in the PCM during the day. As a result, the horticultural greenhouse will be cooled during the day. The accumulated heat is used at night to heat the horticultural greenhouse. The PCM is then not discharged using outside air as happens during summer, but the accumulated heat is advantageously used to heat the greenhouse during the night. This takes place in recirculating operation. More or less heat will be admixed from the livestock pen.

### MECHANICAL HEAT, COLD, HUMIDIFICATION AND CARBON DIOXIDE SOURCES INSTEAD OF THE LIVESTOCK PEN.

The insulated livestock pen can be replaced by artificial mechanical sources of energy, such as:
- carbon dioxide fertilization from combined heat and power installations or heating boilers;
- heat and cold storage in the soil (aquifers), and/or
- heat pumps.

The part of this invention relating to the use of the PCM in the horticultural greenhouse can alternatively and/or additionally be combined in a very simple manner with the abovementioned artificial mechanical energy sources, without the mode of operation of either the combined installation or the individual energy sources having to be modified.

The considerable advantage of combining artificial mechanical energy sources with using PCM in the horticultural greenhouse is that these sources can be dimensioned to be relatively small and thus relatively inexpensive. In addition, this will bring about an improvement in the efficiency of the mechanical energy sources.

The invention furthermore relates to a device provided with one or more of the characterizing features described in the attached description and/or illustrated in the attached drawings.

The invention furthermore relates to a method comprising one or more of the characterizing steps described in the attached description and/or illustrated in the attached drawings.

It will be clear that the above description has been given in order to illustrate the operation of preferred embodiments of the invention, and not in order to limit the scope of the invention. Based on the above explanation, a person skilled in the art will immediately be able to think of many variations which fall within the spirit and scope of the present invention.

## Claims

1. Assembly comprising a horticultural facility, such as a horticultural greenhouse, inside which photosynthesis can take place and which is provided with elements which allow sunlight through, and a livestock-breeding facility, such as a pen, inside which a biological oxidation process can take place, in which the livestock-breeding facility comprises an air outlet which is in fluid communication with an air inlet of the horticultural facility and which is provided with an air-displacement device, in which the assembly is furthermore provided with heat-storage elements comprising phase change material (PCM), and in which the heat-storage elements comprise an air-circulation device for circulating air from the horticultural facility over the PCM, and in which the assembly comprises a control device which is provided with sensors for measuring at least one ambient variable, such as temperature and/or atmospheric humidity and/or carbon dioxide, in the horticultural facility and in the livestock-breeding facility, and which is operationally coupled to the air-displacement device and the air-circulation device, for controlling the air stream past the PCM and the air flow rate of the livestock-breeding facility to the horticultural facility on the basis of the values of the at least one ambient variable determined by means of the sensors.

2. Assembly according to Claim 1, in which the livestock-breeding facility furthermore comprises an air inlet provided with a heat exchanger.

3. Assembly according to Claim 1 or 2, in which the air inlet in the livestock-breeding facility is provided with a further air-displacement device.

4. Assembly according to one of the preceding claims, in which the PCM has a temperature range of 15-30, preferably 18-28 degrees Celsius.

5. Assembly according to one of the preceding claims, in which a filter, such as an odour filter and/or an ammonia filter, is arranged between the air outlet of the livestock-breeding facility and the air inlet of the horticultural facility.

6. Assembly according to one of the preceding claims, in which the horticultural facility is built on top of the livestock-breeding facility.

7. Assembly according to one of the preceding claims, in which the PCM is arranged in a fan-convector arrangement provided with a fan on the suction side, the PCM preferably being in the form of panels, preferably arranged substantially parallel to one another.

8. Assembly according to one of the preceding claims, in which the PCM is arranged in at least one low-pressure induction unit, the PCM preferably being arranged in the form of panels, and provided with air ducts, preferably ducts between panels of PCM which are arranged substantially parallel to one another.

9. Assembly according to one of the preceding claims, in which the charging and discharging of the PCM takes place in a 24-hour cycle.

10. Assembly according to one of the preceding claims, in which the sensors are chosen from the group of sensors coniuting of a temperature sensor, an atmospheric humidity sensor, and a carbon dioxide sensor.

11. Method for controlling climate conditions in an assembly according to one of the preceding claims, in which air is admitted into the livestock-breeding facility by means of the air inlet, the air admitted is transported past the livestock present, the air is subsequently passed into the greenhouse via the air inlet of the horticultural facility, and the air of the greenhouse is passed over the PCM, with the control device determining ambient parameters, such as the temperature, atmospheric humidity and/or carbon dioxide in the livestock-breeding facility and in the horticultural facility, comparing the ambient parameters with predetermined values thereof, and adjusting the flow rate of the air admitted in the livestock-breeding facility and from the livestock-breeding facility to the horticultural facility on the basis of the comparison.

12. Air-treatment device for a livestock-breeding facility or a horticultural facility, in particular for use in an assembly, device or facility according to one of the preceding claims, comprising a stack of substantially parallel elements provided with PCM material and an air-displacement device, arranged so as to pass air between the elements, in which, in particular, the elements and air-displacement device are accommodated in a closed housing which is provided with an air inlet and an air outlet, and more particularly, provided with a control device for controlling the air-displacement device, in particular on the basis of a measured temperature.
